(19) Europäisches Patentamt
European Patent Office
Office européen des brevets

(11) **EP 4 383 192 A1**

(12) **EUROPEAN PATENT APPLICATION**
published in accordance with Art. 153(4) EPC

(43) Date of publication:
**12.06.2024 Bulletin 2024/24**

(21) Application number: **21952729.8**

(22) Date of filing: **03.08.2021**

(51) International Patent Classification (IPC):
***G06T 7/20*** (2017.01)

(52) Cooperative Patent Classification (CPC):
**G06V 40/172; G06T 7/00; G06T 7/20;
G06V 10/774; G06V 40/161**

(86) International application number:
**PCT/JP2021/028791**

(87) International publication number:
**WO 2023/012900 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NEC Corporation
108-8001 Tokyo (JP)**

(72) Inventors:
• **OGINO, Yuka
  Tokyo 108-8001 (JP)**
• **YOSHIMI, Kosuke
  Tokyo 108-8001 (JP)**

(74) Representative: **Betten & Resch
Patent- und Rechtsanwälte PartGmbB
Maximiliansplatz 14
80333 München (DE)**

(54) **INFORMATION PROCESSING DEVICE, INFORMATION PROCESSING METHOD, AND STORAGE MEDIUM**

(57) The information processing apparatus includes: an acquisition unit that acquires time series data representing a displacement of a position in a three-dimensional coordinate system regarding a person included in a captured image obtained by capturing a predetermined area; a determination unit that, based on the time series data, determines whether or not the person is a target person of biometrics authentication; and an authentication unit that performs the biometrics authentication to the target person.

FIG. 1

EP 4 383 192 A1

**Description**

[Technical field]

This disclosure relates to an information processing apparatus, an information processing method and a storage medium.

[Background Art]

Patent Literature 1 discloses an authentication system that tracks a person in a video image to extract a candidate person positioned at a distance capable of performing biometrics authentication from an authentication camera, and controls the execution of biometrics authentication based on the presence or absence of an authentication history of the candidate person.

[Citation List]

[Patent Literature]

PTL 1: International publication No. WO 2020/065852

[Summary of Invention]

[Technical Problem]

In the authentication system as described in Patent Literature 1, even if a person has no intention of authentication, if the person exists within a predetermined distance from the authentication camera, there is a possibility that biometrics authentication would be performed on the person.

An object of this disclosure is to provide an information processing apparatus, an information processing method, and a storage medium capable of performing biometrics authentication for a person who is a target of authentication.

[Solution to Problem]

According to one aspect of this disclosure, there is provided an information processing apparatus including: an acquisition unit that acquires time series data representing a displacement of a position in a three-dimensional coordinate system regarding a person included in a captured image obtained by capturing a predetermined area; a determination unit that, based on the time series data, determines whether or not the person is a target person of biometrics authentication; and an authentication unit that performs the biometrics authentication to the target person.

According to another aspect of this disclosure, there is provided an information processing method including: acquiring time series data representing a displacement of a position in a three-dimensional coordinate system regarding a person included in a captured image obtained by capturing a predetermined area; based on the time series data, determining whether or not the person is a target person of biometrics authentication; and performing the biometrics authentication to the target person.

According to yet another example aspect of this disclosure, provided is a storage medium storing a program that causes a computer to perform: acquiring time series data representing a displacement of a position in a three-dimensional coordinate system regarding a person included in a captured image obtained by capturing a predetermined area; based on the time series data, determining whether or not the person is a target person of biometrics authentication; and performing the biometrics authentication to the target person.

[Brief Description of Drawings]

[Fig. 1] FIG. 1 is a block diagram illustrating an example of the overall configuration of an iris authentication system according to a first example embodiment.

[Fig. 2] FIG. 2 is an image diagram at the time of an authentication processing for a person in the iris authentication system according to the first example embodiment.

[Fig. 3] FIG. 3 is a diagram illustrating an example of time series data stored in a storage unit according to the first example embodiment.

[Fig. 4] FIG. 4 is a block diagram illustrating an example of a hardware configuration of an authentication apparatus according to the first example embodiment.

[Fig. 5] FIG. 5 is a flowchart illustrating an outline of an authentication processing performed in the authentication apparatus according to the first example embodiment.

[Fig. 6] FIG. 6 is a diagram illustrating an example of a trajectory of movement of a person who is determined to be an authentication target person by the authentication apparatus according to the first example embodiment.

[Fig. 7A] FIG. 7A is a diagram illustrating an example of a trajectory of movement of a person who is determined not to be the authentication target person by the authentication apparatus according to the first example embodiment.

[Fig. 7B] FIG. 7B is a diagram illustrating an example of a trajectory of movement of a person who is determined not to be the authentication target person by the authentication apparatus according to the first example embodiment.

[Fig. 8] FIG. 8 is a block diagram illustrating an example of the overall configuration of an iris authentication system according to a second example embodiment.

[Fig. 9] FIG. 9 is a schematic diagram illustrating an arrangement example of a capturing device in the iris authentication system according to the second example embodiment.

[Fig. 10] FIG. 10 is a flowchart illustrating an outline of the authentication processing performed by the authentication apparatus according to the second example embodiment.

[Fig. 11] FIG. 11 is a block diagram illustrating an example of the overall configuration of an iris authentication system according to a third example embodiment.

[Fig. 12] FIG. 12 is a diagram illustrating an example of a neural network for explaining machine learning in a training unit according to the third example embodiment.

[Fig. 13] FIG. 13 is a flowchart illustrating an outline of the authentication processing performed by the authentication apparatus according to the third example embodiment.

[Fig. 14] FIG. 14 is a block diagram illustrating an example of the overall configuration of an iris authentication system according to a fourth example embodiment.

[Fig. 15] FIG. 15 is a diagram illustrating an example of an image projected by a projector according to the fourth example embodiment.

[Fig. 16] FIG. 16 is a block diagram illustrating an example of the overall configuration of a face authentication system according to a fifth example embodiment.

[Fig. 17] FIG. 17 is a flowchart illustrating an outline of the authentication processing performed by the authentication apparatus according to the fifth example embodiment.

[Fig. 18] FIG. 18 is a flowchart illustrating an outline of the authentication processing performed by the authentication apparatus according to a sixth example embodiment.

[Fig. 19] FIG. 19 is a diagram illustrating an example of a trajectory of movement and a visual line direction of a person who is determined not to be a person to be authenticated by the authentication apparatus according to the sixth example embodiment.

[Fig. 20] FIG. 20 is a functional block diagram illustrating the overall configuration of an information processing apparatus according to a seventh example embodiment.

[Description of Embodiments]

Exemplary example embodiments of this disclosure will be described below with reference to the drawings. Throughout the drawings, similar features or corresponding features are labeled with the same references, and the description thereof may be omitted or simplified.

[First example embodiment]

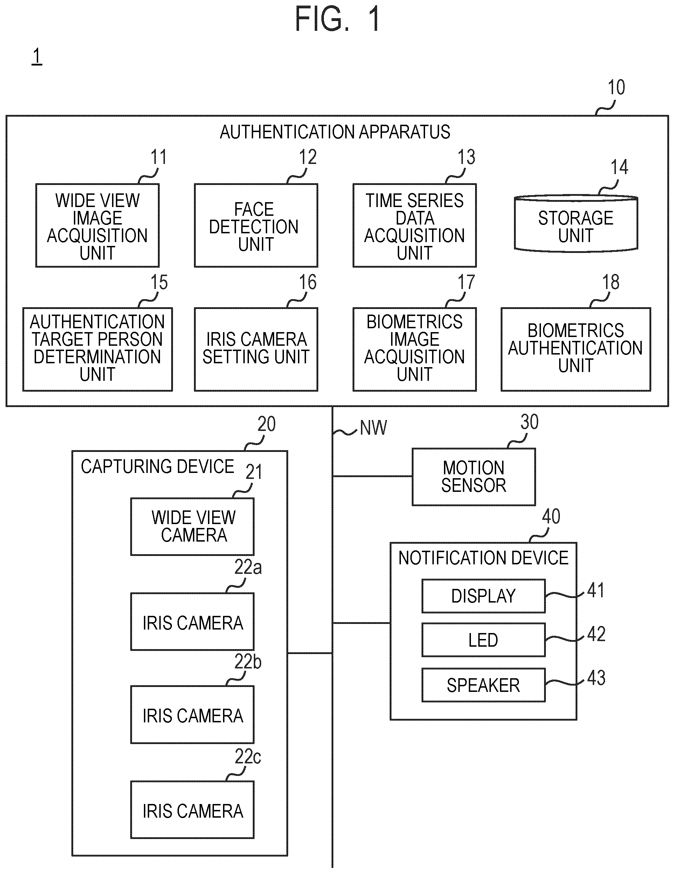

First, the configuration of an iris authentication system 1 according to a first example embodiment will be described. FIG. 1 is a block diagram illustrating an example of the overall configuration of the iris authentication system 1 according to the first example embodiment.

The iris authentication system 1 performs authentication by capturing an iris of a person to be an authentication target person and performing matching of a captured image and a registered iris image. The pattern of the iris is unique and not changed throughout life. Therefore, the identity can be confirmed by matching the iris pattern acquired in the authentication processing and the iris image registered in the database in advance.

The iris authentication system 1 can be applied to, for example, identity confirmation for entry and departure at an airport or the like, identity confirmation at an administrative institution, identity confirmation for entry and exit to and from a factory or an office, identity confirmation for entry to an event site, and the like.

As illustrated in FIG. 1, the iris authentication system 1 includes an authentication apparatus 10, a capturing device 20, a motion sensor 30, and a notification device 40. Each device is connected to a network NW such as a Local Area Network (LAN) or the Internet.

The authentication apparatus 10 is a computer such as a server for performing biometrics authentication. Specifically, the authentication apparatus 10 executes matching processing of an iris image (or feature quantity) of an authentication target person captured by the capturing device 20 and a registered iris image (or feature quantity) of a registrant registered in advance in the database, and authenticates the authentication target person based on matching result.

The capturing device 20 captures a person who exists in a predetermined area based on the control information inputted from the authentication apparatus 10, and outputs the captured image to the authentication apparatus 10. The capturing device 20 according to first example embodiment is provided with a wide view camera 21 and three numbers of iris cameras 22a to 22c. In the first example embodiment, the term "predetermined area" refers to a three-dimensional space of a predetermined range and size located in front of the capturing device 20.

The wide view camera 21 is a capturing device that captures an image which totally takes a wide field of view of a predetermined area by visible light. A digital camera using a Complementary Metal Oxide Semiconductor (CMOS) image sensor, a Charge Coupled Device (CCD) image sensor or the like may be used as the wide view camera 21 so as to be suitable for image processing in the authentication apparatus 10. The wide view camera 21 may further include a light source for irradiating illumination light toward the front.

The iris cameras 22a to 22c are capturing devices including an infrared light irradiation device (not illustrated) and an infrared light camera (not illustrated), and images of a person's eyes are imaged by infrared light. The infrared light irradiation device includes a light emitting element emitting infrared light such as an infrared light LED. The wavelength of the infrared light emitted from the infrared light irradiation device can be, for example, a near-infrared area of about 800 nm.

The infrared light camera includes a light receiving element configured to have sensitivity to infrared light. As the infrared optical camera, a digital camera using the CMOS image sensor, the CCD image sensor or the like can be used. An image of an eye including an iris image used for iris authentication is acquired by irradiating an eye of a person with infrared light from an infrared light irradiation device and capturing the infrared light reflected by the iris with an infrared light camera. By acquiring the iris image captured by infrared light, a high contrast image can be obtained regardless of the color of the iris, and the influence of the reflection by the cornea can be reduced.

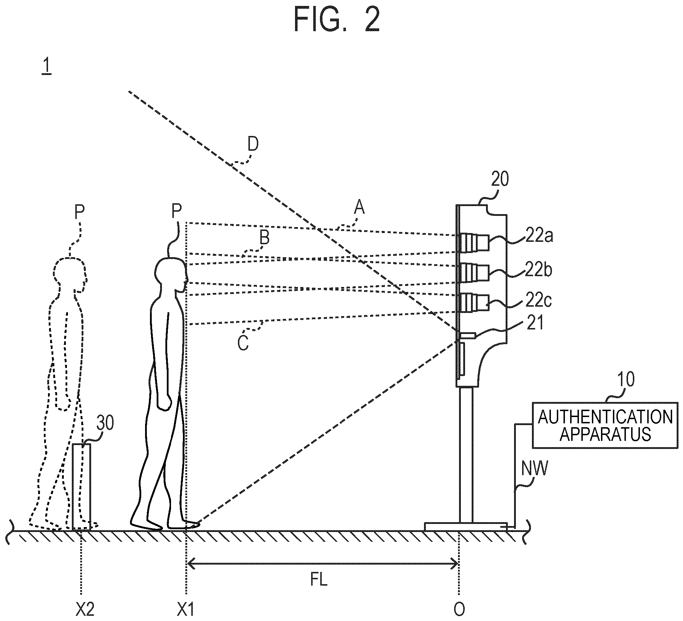

FIG. 2 is an image diagram at the time of an authentication processing for a person in the iris authentication system 1 according to the first example embodiment. Here, the case is illustrated where the image capturing process is performed by one of the three iris cameras 22a to 22c when the person P moves from the position O where the capturing device 20 is arranged to the position X1 at the focal length FL.

In FIG. 2, the visual field ranges A to C of the three numbers of iris cameras 22a to 22c arranged in the vertical direction are indicated by broken lines, respectively. A part of the visual field range A and a part of the visual field range B overlap at the position X1. Similarly, a part of the visual field range B and a part of the visual field range C overlap at the position P1. The visual field range D is preferably set to include a height of about three meters above the ground at position P1.

The motion sensor 30 is a detector which outputs a detection signal to the authentication apparatus 10 when detecting a person passing the position of the sensor. The authentication apparatus 10 can control capturing process by the wide view camera 21 and the iris cameras 22a to 22c using the detection signal from the motion sensor 30 as a trigger. As illustrated in FIG. 2, the motion sensor 30 according to the first example embodiment is located at a position X2 farther from the position O than the position X1. The motion sensor 30 outputs the detection signal to the authentication apparatus 10 when the person P passes the position X2. Thus, the authentication apparatus 10 activates the iris cameras 22a to 22c at the timing when the person P approaches the position X1 of the focal length FL, and can captures the iris of the person P.

The notification device 40 provides various notifications and attention to persons based on the notification control information from the authentication apparatus 10. The notification device 40 includes a display 41, an LED 42 and a speaker 43.

The display 41 displays a face image of a person and a text message in a display area to notify whether or not a gate (not illustrated) can be passed. The LED 42 notifies the person of the authentication result by switching lighting/non-lighting and switching lighting colors.

The speaker 43 outputs an alarm sound and a guide sound to a person moving in a predetermined area in order to improve the accuracy of biometrics authentication.

As illustrated in FIG. 1, the authentication apparatus 10 includes a wide view image acquisition unit 11, a face detection unit 12, a time series data acquisition unit 13, a storage unit 14, an authentication target person determination unit 15, an iris camera setting unit 16, a biometrics image acquisition unit 17, and a biometrics authentication unit 18.

The wide view image acquisition unit 11 acquires a wide view image of a predetermined area captured by a wide view camera 21. The wide view image acquisition unit 11 continuously acquires the wide view image along a time series. The face detection unit 12 detects a face of a person included in the wide view image and outputs the face image to the time series data acquisition unit 13.

The time series data acquisition unit 13 performs image analysis processing of the wide view image and the face image, calculates the face position, the eye position, the visual line direction, the interocular distance and the like of the person in the image, and generates time series data. The time series data acquisition unit 13 stores the time series data in a storage unit 14 when acquiring the time series data representing a displacement of a position in a three-dimensional coordinate system of a person included in a captured image capturing a predetermined area. Since the displacement of the position in the three-dimensional coordinate system corresponds to the trajectory of the movement of the person, it is also referred to as the "trajectory of the movement" in the following description.

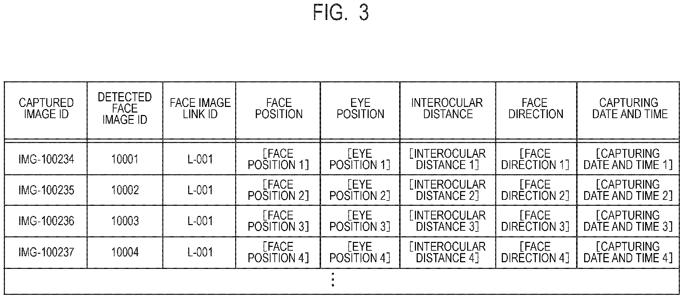

FIG. 3 is a diagram illustrating an example of time series data stored in the storage unit 14 according to the first example embodiment. The time series data includes a captured image ID, a detected face image ID, a face image link ID, the face position, the eye position, the interocular distance, the face direction, and a capturing date and time as data items.

The captured image ID is a unique identifier for each captured image. The detected face image ID is a unique identifier for each face image of the person detected from the captured image. The face image link ID is an identifier for associating a plurality of detected face images regarded as the same person. The face position is a position coordinate of the face of the person in the captured image. The eye position is a position coordinate of the eye of the person in the captured image. The interocular distance is the distance in the image between the eyes of the person. The face direction is the direction of the face of the person in the captured image. Note that the data items included in the time series data are not limited to these items. The time series data may further include, for example, the visual line direction of the person or distance data to the person detected by a distance measuring sensor (not illustrated) as data items.

The information stored in the storage unit 14 is not limited to the above-described time series data. The storage unit 14 stores various data necessary for the operation of the authentication apparatus 10. More specifically, the storage unit 14 further stores the biometrics information (iris image) of the registrant referred to in the biometrics authentication of the biometrics authentication unit 18, the data of the criterion for determining whether or not the registrant is the authentication target person, and the like.

The authentication target person determination unit 15 determines whether or not the person is the authentication target person of biometrics authentication based on the time series data. The authentication target person determination unit 15 according to the first example embodiment determines a person moving toward a position for capturing a biometrics image used for biometrics authentication as the authentication target person. In other words, the authentication target person determination unit 15 determines that the person moving toward the capturing position is a person having the intention of biometrics authentication. Conversely, the authentication target person determination unit 15 determines that a person who simply passes in front of the capturing device 20, a person who is stopped in a predetermined area, a person who moves away from the capturing device 20, or the like is a person who has no intention of biometrics authentication.

The iris camera setting unit 16 selects one of the iris cameras 22a to 22c based on the eye position of the person in the three-dimensional coordinate system represented by the time series data, and sets the capturing conditions. The iris camera setting unit 16 also has a function as a control unit for controlling imaging in the iris cameras 22a to 22c.

The biometrics image acquisition unit 17 acquires a biometrics image (iris image) of a person captured by one of the iris cameras 22a to 22c. The biometrics authentication unit 18 matches a biometrics image (iris image) of the authentication target person acquired by the biometrics image acquisition unit 17 and a registered biometrics image (registered iris image) stored in the storage unit 14 to perform biometrics authentication to an authentication target person.

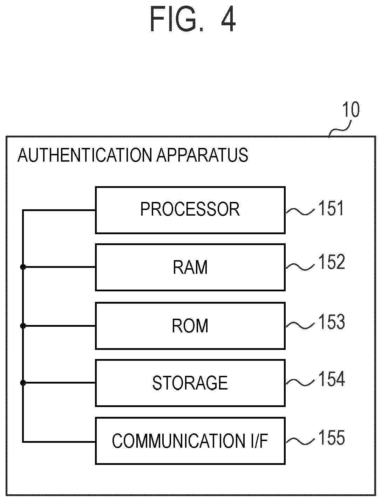

FIG. 4 is a block diagram illustrating an example of the hardware configuration of the authentication apparatus 10 according to the first example embodiment. The authentication apparatus 10 includes a processor 151, a RAM Random Access Memory (RAM) 152, a Read Only Memory (ROM) 153, a storage 154, and a communication interface (I/F) 155 as computers for performing arithmetic operation, control, and storage. Each device is connected to each other via a bus, wiring, driving device, etc.

The processor 151 performs predetermined operations according to programs stored in the ROM 153, the storage 154, and the like, and has a function of controlling each unit of the authentication apparatus 10. The processor 151 may be a central processing unit (CPU), a graphics processing unit (GPU), a field programmable gate array (FPGA), a digital signal processor (DSP), an application specific integrated circuit (ASIC), or the like. One of the above examples may be used, or a plurality of processors may be used in parallel.

The RAM 152 is composed of a volatile storage medium and provides a temporary memory area necessary for operation of the processor 151. The ROM 153 is composed of a nonvolatile storage medium and stores necessary information such as a program used for the operation of the authentication apparatus 10.

The storage 154 is composed of a nonvolatile storage medium, and stores a database, an operation program of the authentication apparatus 10, and the like. The storage 154 is composed of, for example, a hard disk drive (HDD) or a solid state drive (SSD).

The communication I/F 155 is a communication interface based on standards such as Ethernet (Registered trademark), Wi-Fi (Registered trademark), 4G or 5G, and is a module for communicating with other devices.

The processor 151 loads the programs stored in the ROM 153, the storage 154 and the like into the RAM 152 and executes them. Thus, the processor 151 realizes the functions of the wide view image acquisition unit 11, the face detection unit 12, the time series data acquisition unit 13, the authentication target person determination unit 15, the iris camera setting unit 16, the biometrics image acquisition unit 17, the biometrics authentication unit 18, and the like.

Note that the hardware configuration illustrated in FIG. 4 is an example, and other devices may be added, or some devices may not be provided. Some devices may be replaced with other devices having similar functions. In addition, some of the functions of first example embodiment may be provided by other devices via a network, and the functions of the first example embodiment may be implemented by being distributed among a plurality of devices. The hardware configuration illustrated may be modified accordingly.

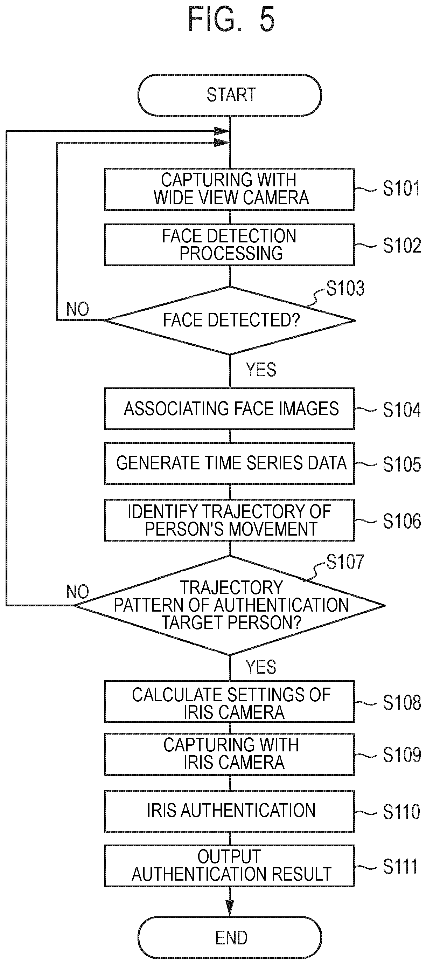

FIG. 5 is a flowchart illustrating an outline of the authentication processing performed by the authentication apparatus 10 according to the first example embodiment.

In step S101, the wide view image acquisition unit 11 acquires a wide view image of a predetermined area by having the wide view camera 21 capture the predetermined area.

In step S102, the face detection unit 12 analyzes the wide view image to detect a face image of a person existing in the image.

In step S103, the face detection unit 12 determines whether or not the face image of the person is detected from the wide view image. If the face detection unit 12 determines that the face image is detected (YES in step S103), the process proceeds to step S104. On the other hand, if the face detection unit 12 determines that the face image is not detected (NO in step S103), the process returns to step S101.

In step S104, the face detection unit compares the face images continuously detected in the time series each other, and if it is determined that face images are of the same person, the face detection unit 12 issues a face image link ID to associate the face images with each other. As a method for determining whether or not a person is the same person, for example, a method based on the positional relationship of faces detected in a captured image, a method for matching face images detected from each of a plurality of captured images taken continuously, and the like can be mentioned.

In addition, in order to track a person detected from a captured image, an identification image serving as a mark may be projected onto the person or around the person by a projector (not illustrated) to identify the same person among different captured images. Specific examples of the image for identification include, for example, images containing different colors, symbols or shapes for each person.

In step S105, the time series data acquisition unit 13 generates time series data relating to the captured image and the face image. More specifically, the time series data acquisition unit 13 extracts data of the face position, the eye position, the interocular distance, and the face direction of the person by analyzing the captured image. Then, the time series data acquisition unit 13 associates the captured image ID, the detected face image ID, the face image link ID, the face position, the eye position, the interocular distance, the face direction, and the capturing date and time, and stores them in the storage unit 14 as time series data.

In step S106, the authentication target person determination unit 15 specifies the trajectory of the movement of the person based on the time series data of the same person stored in the storage unit 14. The trajectory of the movement of the person in first example embodiment is specified based on the position of the eyes or face of the person and the displacement in the time series of interocular distance.

In step S107, the authentication target person determination unit 15 determines whether the trajectory of the movement of the person identified in step S106 matches the predetermined trajectory pattern for the authentication target person. The trajectory pattern is a reference displacement (reference trajectory) at the time of moving to the capturing position, which is defined in advance for a person regarded as the authentication target person.

If the authentication target person determination unit 15 determines that the trajectory of the movement of the detected person matches the predetermined trajectory pattern (YES in step S107), the process proceeds to step S108.

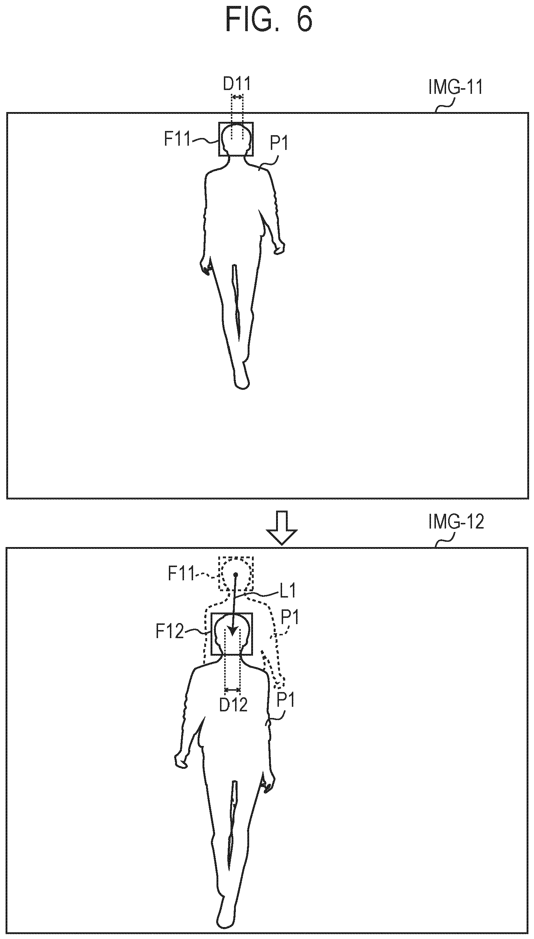

FIG. 6 is a diagram illustrating an example of a trajectory of movement of a person who is determined to be the authentication target person by the authentication apparatus 10 according to the first example embodiment. The captured image IMG-11 and the captured image IMG-12 are images continuously captured in a predetermined cycle by the wide view camera 21. The face F11 and the face F2 of the person P1 are detected from the captured image IMG-11 and the captured image IMG-12, respectively. The interocular distance of the person P1 in the captured image IMG-11 is D11. The interocular distance of the person P1 in the captured image IMG-12 is D12 longer than D11. Therefore, in FIG. 6, the trajectory L1 of the movement of the person P1 coming straight toward the capturing device 20 is specified. Thus, in the authentication apparatus 10, it is determined that the person P1 has the intention of authentication and is the authentication target person. It should be noted that the pattern of the trajectory of the movement of the person determined to be the authentication target person is not limited to this.

On the other hand, if the authentication target person determination unit 15 determines that the trajectory of the movement of the detected person does not match the predetermined trajectory pattern (NO in step S107), the process returns to step S101.

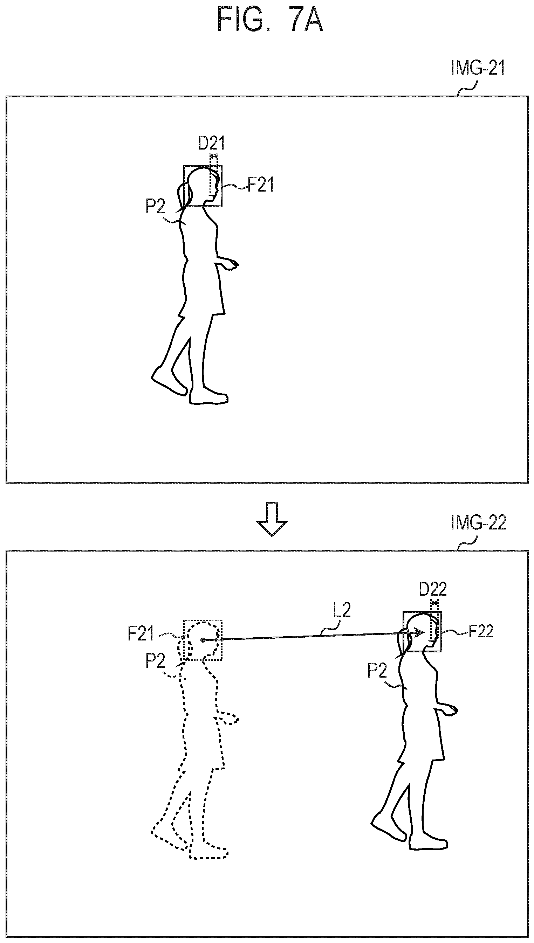

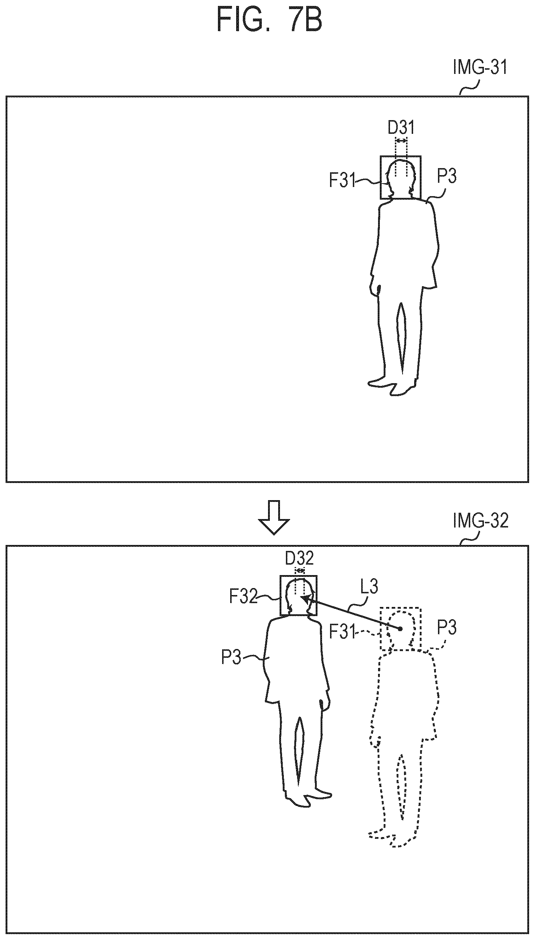

FIGS. 7A and 7B are diagrams illustrating an example of a trajectory of movement of a person who is determined not to be the authentication target person by the authentication apparatus 10 according to the first example embodiment. In FIG. 7A, the captured image IMG-21 and the captured image IMG-22 are images continuously captured in a predetermined cycle by the wide view camera 21. The face F21 and the face F22 of the person P2 are detected from the captured image IMG-21 and the captured image IMG-22, respectively. The interocular distance of the person P2 in the captured image IMG-21 is D21. The distance between the eyes of the person P2 in the captured image IMG-22 is D22, which isequivalent to D21. It is also understood from the position coordinates of the face F21 and the face F22 that the person P2 is moving in the right direction. Accordingly, in FIG. 7A, the trajectory L2 of the movement of the person P2 across the predetermined area without approaching the capturing device 20 is specified. Thus, in the authentication apparatus 10, it is determined that the person P2 is a person who has no intention of authentication and is not the authentication target person.

In FIG. 7B, the captured image IMG-31 and the captured image IMG-32 are images continuously captured at a predetermined cycle by the wide view camera 21. The face F31 and the face F32 of the person P3 are detected from the captured image IMG-31 and the captured image IMG-32, respectively. The interocular distance of the person P3 in the captured image IMG-31 is D31. The interocular distance of the person P3 in the captured image IMG-32 is D32 shorter than D31. Further, it is understood from the position coordinates of the face F31 and the face F32 that the person P3 is moving in the left direction. Therefore, in FIG. 7B, the trajectory L3 of the movement of the person P3 away from the capturing device 20 is specified. Thus, in the authentication apparatus 10, it is determined that the person P3 is a person who has no intention of authentication and is not the authentication target person. It should be noted that the trajectory pattern of the movement of the person who is determined not to be the authentication target person is not limited to these.

In step S108, the iris camera setting unit 16 selects one of the iris cameras 22a to 22c that corresponds to the position and height of the eye of the person determined to be the authentication target person, and sets capturing conditions such as focus and capturing angle. For example, when the height of the person is an average value of an adult, the iris camera setting unit 16 selects the center iris camera 22b and sets capturing conditions.

In step S109, the biometrics image acquisition unit 17 acquires an iris image of the person by controlling the imaging processing of the iris camera set in step S108. The iris image is captured by the iris camera at a higher resolution and in a narrower area than that of the wide view camera (first camera) 21, and a highly accurate iris image can be acquired by selecting and using any one of the appropriate iris cameras (second cameras) 22a to 22c.

In step S110, the biometrics authentication unit 18 matches the iris image of the person and a group of registrant's iris images previously registered in the storage unit 14 to perform iris authentication.

In step Sill, the biometrics authentication unit 18 outputs the authentication result of the iris authentication and terminates the process.

According to the first example embodiment, prior to the authentication processing, the presence or absence of the intention to authenticate the person is determined based on the time series data representing the displacement (movement trajectory) of the position of the person existing in the captured image in the three-dimensional coordinate system. Thus, an iris authentication system 1 capable of executing authentication processing to an authentication target person is provided.

Further, the authentication apparatus 10 is configured to determine the detected person moving toward the capturing position as the authentication target person by comparing the displacement of the position of the detected person in the three-dimensional coordinate system obtained from the time series data with the reference displacement (reference trajectory) at the time of moving the biometrics image used for the biometrics authentication to the capturing position defined in advance for the person regarded as the authentication target person. Thus,it can easily and highly accurately determine whether the detected person is the authentication target person or not.

[Second example embodiment]

Hereinafter, an iris authentication system 2 according to the second example embodiment will be described below. In the following, differences with first example embodiment are mainly explained, and descriptions of common parts are omitted or simplified.

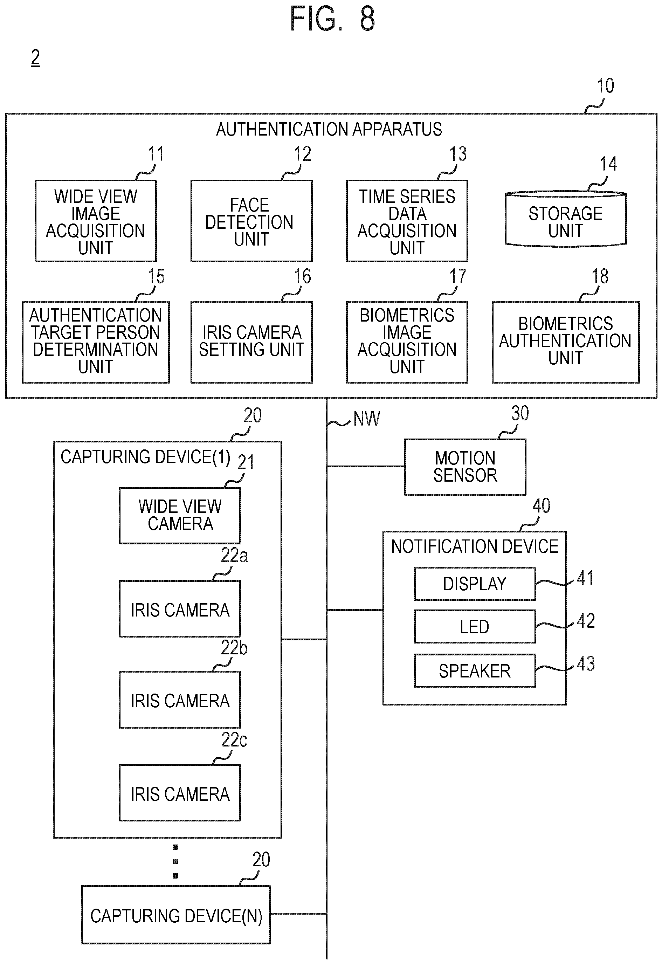

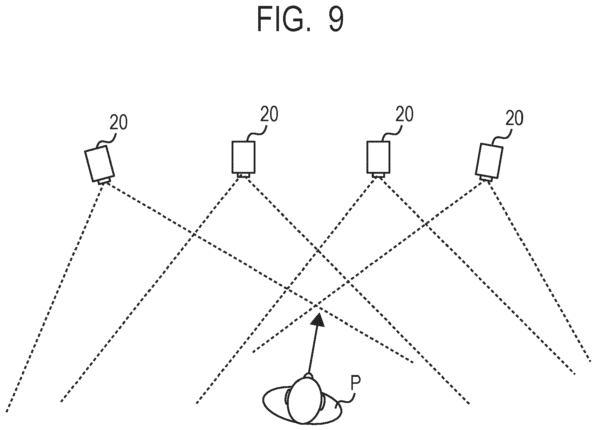

FIG. 8 is a block diagram illustrating an example of the overall configuration of the iris authentication system 2 according to the second example embodiment. FIG. 9 is a schematic view illustrating an arrangement example of the capturing device 20 in the iris authentication system 2 according to the second example embodiment.

The iris authentication system 2 according to the second example embodiment is different from the iris authentication system 1 according to the first example embodiment in that a plurality of capturing device 20 are arranged apart from each other and that a structure for scoring the certainty of a detected person as the authentication target person is provided. As illustrated in FIG. 8, each of the plurality of capturing device 20 includes one wide view camera 21 and three numbers of iris cameras 22a to 22c.

Further, as illustrated in FIG. 9, the plurality of capturing devices 20 are arranged apart from each other, and capture a predetermined area from different places. Therefore, a person existing in a predetermined area is captured by a plurality of capturing devices 20 at different capturing angles.

When acquiring a plurality of captured images acquired from a plurality of capturing devices 20 (wide view cameras 21), the wide view image acquisition unit 11 outputs the captured images to the face detection unit 12. The face detection unit 12 detects a face image of a person from captured images acquired in time series. The time series data acquisition unit 13 stores the time series data in the storage unit 14 when generating the time series data associated with the camera ID of the wide view camera 21.

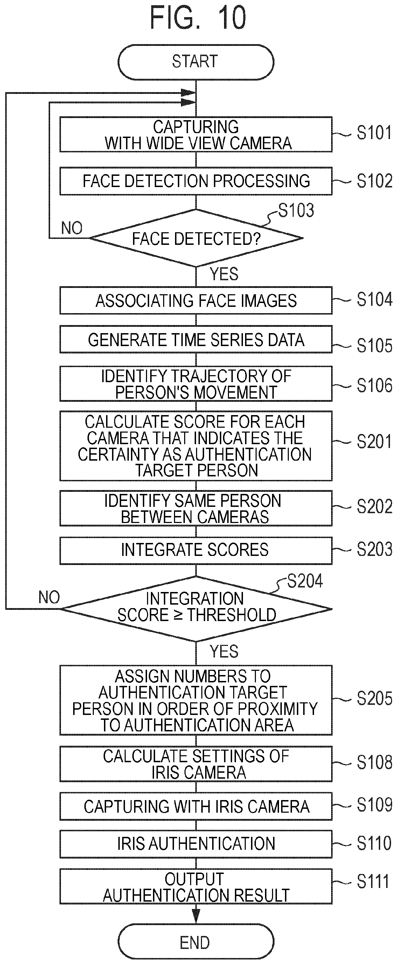

FIG. 10 is a flowchart illustrating an outline of the authentication processing performed by the authentication apparatus 10 according to the second example embodiment. This process is common to the flowchart illustrated in FIG. 5 for steps S101 to S106 and steps S108 to Sill. For this reason, the following description focuses on a portion different from the flowchart of FIG. 5.

When the processing of steps S101 to S106 is completed, the process proceeds to step S201.

In step S201, the authentication target person determination unit 15 calculates a score for each wide view camera 21. The score indicates the certainty of the person as the authentication target person.

In step S202, the authentication target person determination unit 15 identifies the same person among the cameras. Specific examples of a method of identifying whether or not a person is the same person among a plurality of cameras include a method of using features of clothing and gait, and a method of identifying the same color as the same person by projecting different colors around each person with a projector.

In step S203, the authentication target person determination unit 15 integrates the scores calculated for each wide view camera 21 to determine an integration score for the person. The integration score includes a mean value, a deviation value, a maximum value, and the like.

In step S204, the authentication target person determination unit 15 determines whether the integration score is equal to or greater than a predetermined threshold. If the authentication target person determination unit 15 determines that the integration score is equal to or greater than a predetermined threshold (YES in step S204), the detected person is considered to be the authentication target person, and the process proceeds to step S205.

On the other hand, if the authentication target person determination unit 15 determines that the integration score is less than a predetermined threshold (NO in step S204), the detected person is not considered to be the authentication target person, and the process returns to step S101.

In step S205, the authentication target person determination unit 15 assigns numbers to the authentication target person in the order of proximity to the authentication area. This number corresponds to the biometric priority. Thereafter, the process proceeds to step S108.

According to the second example embodiment, since it is possible to determine whether or not a person is an authentication target person based on a plurality of captured images captured from different angles by a plurality of capturing device 20, the accuracy of the determination processing can be enhanced more than in the case of first example embodiment.

Further, since the authentication apparatus 10 is configured to calculate a score indicating the certainty that the person detected from the captured image is the authentication target person. Thus, for example, the determination criteria of the authentication target person can be flexibly changed by adjusting a threshold being compared with the calculated score.

[Third example embodiment]

Hereinafter, an iris authentication system 3 according to the third example embodiment will be described below. In the following, differences with first example embodiment are mainly explained, and descriptions of common parts are omitted or simplified.

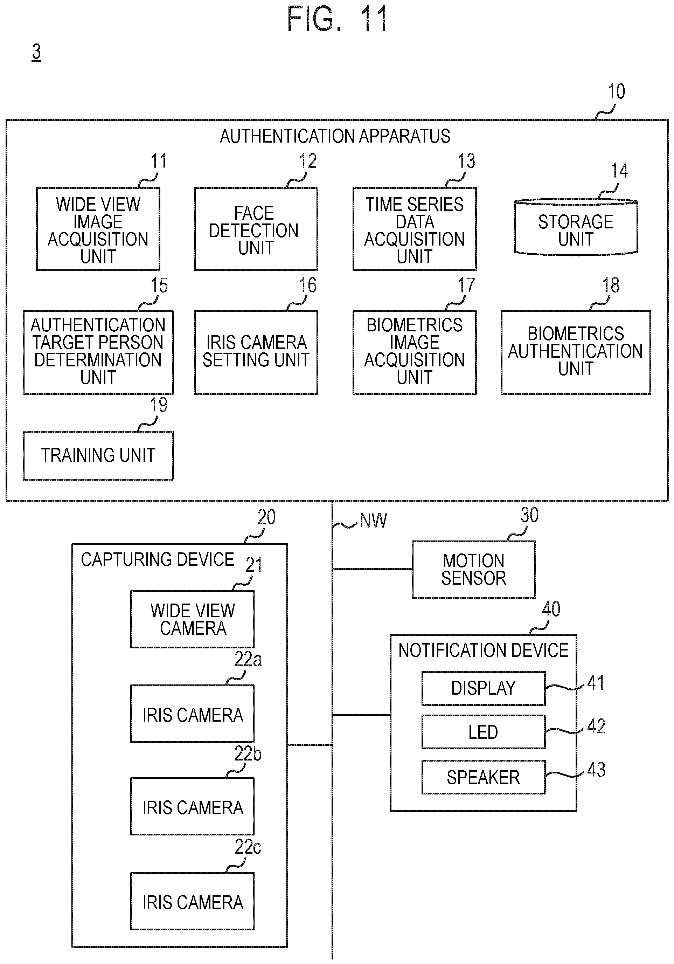

FIG. 11 is a block diagram illustrating an example of the overall configuration of the iris authentication system 3 according to the third example embodiment. As illustrated in FIG. 11, the iris authentication system 3 according to the third example embodiment is different from the iris authentication system 1 according to the first example embodiment in that the authentication apparatus 10 further includes a training unit 19.

The training unit 19 trains a model for determining whether or not a person is the authentication target person based on the time series data regarding a first person determined to be the authentication target person and time series data regarding a second person determined not to be the authentication target person. The training unit 19 can also train a model by using time series data of one of the first person and the second person.

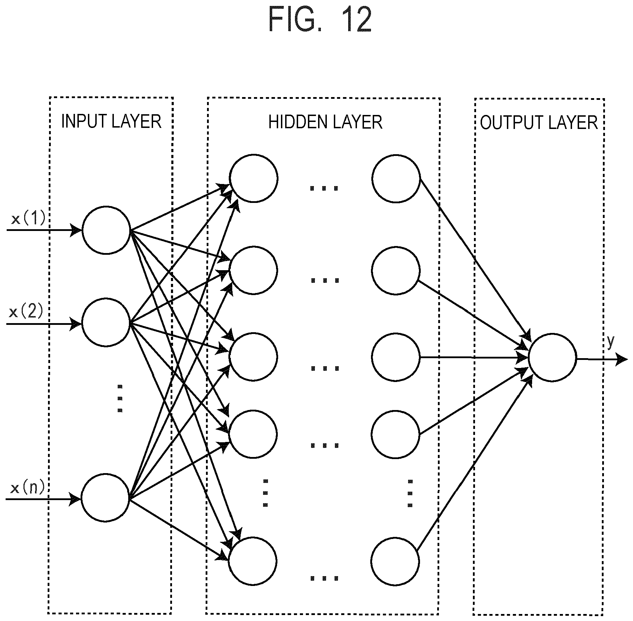

FIG. 12 is a diagram illustrating an example of a neural network for explaining machine learning in the training unit 19 according to the third example embodiment. The neural network illustrated in FIG. 12 includes an input layer having a plurality of nodes, an intermediate layer having a plurality of nodes, and an output layer having one node. Time series data indicating the trajectory of the movement of the person detected from the captured image as input values x (1) to x (n) is input to each node of the input layer. Each node of the hidden layer is connected to each node of the input layer. Each element of the input value inputted to the node of the hidden layer is used for operation in each node of the hidden layer. Each node of the hidden layer calculates an operation value by using, for example, an input value inputted from each node of the input layer, a predetermined weight, and a predetermined bias value. Each node of the hidden layer is connected to an output layer, and outputs the calculated operation value to the node of the output layer. The node of the output layer receives an operation value from each node of the hidden layer.

The node of the output layer outputs a value indicating a determination result of whether or not a person is the authentication target person by using the operation value input from each node of the hidden layer, a weight, and a bias value. When the neural network is trained, for example, an error back propagation method is used. Specifically, an output value obtained when data is input to the input layer is compared with an output value obtained from the training data, and errors of the two compared output values are fed back to the hidden layer. This is repeated until the error falls below a predetermined threshold. By such a training process, when various time series data is inputted to a neural network (trained model), a value y indicating a determination result whether or not the target person is an authentication target person can be outputted.

As the time series data used for training, it is preferable to use, for example, the following data according to the model to be generated.

(1) To generate a discriminant model for authenticated and unauthenticated users:

(A) Trajectory information (movement trajectory and eye position trajectory of a person) from the time when the person is captured by the wide view camera 21 to the time when biometrics authentication is completed, and authentication history information (whether authentication processing is executed or not and authentication result) about the person.
(B) Information on the trajectory of a person from the time when the person is captured by the wide view camera 21 to the time when the person is out of the capturing range of the camera, and information that biometrics authentication is not executed for the person.

(2) To generate an anomaly detection model:
Information on the trajectory (movement trajectory and eye position trajectory) of a person from when the person is captured on the wide view camera 21 until authentication is completed, and authentication history information (whether authentication processing is executed or not and the authentication result) about the person. However, only the data of the authentication target person is used. For example, in the case where the abnormality detection model generated from the time series data illustrated in (2) is used, when the time series data of the person detected from the captured image is inputted to the abnormality detection model, the degree of abnormality of the time series data of the person can be discriminated. In other words, the discrimination method using the abnormality detection model is a method in which the normal data distribution is trained in advance using the normal data input and the difference from the normal data is measured in practical use. Therefore, for example, by training a probability distribution map or the like using normal authentication operation data in advance to generate an abnormality detection model, the abnormality degree with respect to the data acquired from the detected person can be calculated.

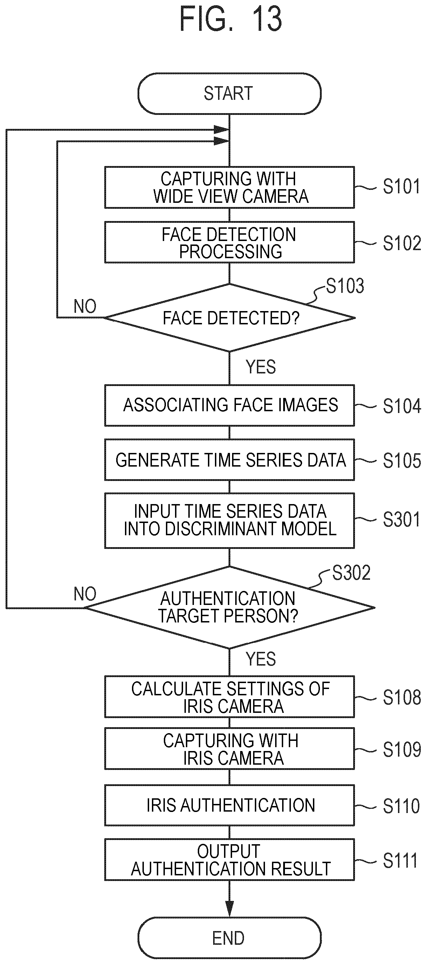

FIG. 13 is a flowchart illustrating an outline of the authentication processing performed by the authentication apparatus 10 according to the third example embodiment. This process is common to the flowchart illustrated in FIG. 5 for steps S101 to S105 and steps S108 to Sill. For this reason, the following description focuses on a portion different from the flowchart of FIG. 5.

When the processing of steps S101 to S105 is completed, the process proceeds to step S301.

In step S301, the authentication target person determination unit 15 inputs time series data related to the person detected from the captured image to the discriminant model. It is assumed that the discriminant model has been trained prior to the processing of FIG. 13.

In step S302, the authentication target person determination unit 15 determines whether or not the person is an authentication target person based on the determination result output from the discriminant model. If the authentication target person determination unit 15 determines that the person is the authentication target person (YES in step S302), the process proceeds to step S108.

On the other hand, when the authentication target person determination unit 15 determines that the person is not the authentication target person (NO in step S303), the process returns to step S101.

According to the third example embodiment, it is possible to determine, at high speed and with high accuracy, whether or not the person detected from the captured image is the authentication target person on the basis of a discriminant model obtained by machine learning.

The model of machine learning in the third example embodiment is not necessarily limited to a neural network. The machine learning method that requires data and a training process in advance and can perform class classification or binary classification on high-dimensional input data can be used. For example, a classifier such as logistic regression or support vector machine (SVM) may be used in addition to a neural network.

For example, the following time series data D1 of the detection target ID1 is assumed as input data.

D1 = {[ID1, Time (1), Face Position (1), Interocular Distance (1)], ... [ID1, Time (n), Face position (n), Interocular distance (n)]}
The input data of such a two-dimensional array (or time-series one-dimensional array) may be classified.

Further, the features may be extracted from the input of the time-series high-dimensional data by a neural network or the like, and the above-mentioned classification method may be combined. In this case, the time series data D1 is converted into another dimensional feature D1' by a predetermined calculation formula (1), and the feature D1' is classified.

$$D1' = f1 \ (D1) \ ... \ (1)$$

Examples of f1 (x) are convolutional neural networks (CNN) such as ResNet, VGGNet, and GoogLeNet. In addition to a feature extractor using a Convolutional Neural Networks (CNN) - based model, a feature extractor using ResNeXt, SENet, EfficientNet, and the like can be used.

Alternatively, the above processing may be performed for each image instead of the time series, and the acquired scores may be added together in time series, or Gaussian weights may be added, so as to be integrated into one score. For example, the following data string d2_t at each time t is acquired as input data. d2_t = [ID2, Time t, Face position (t), Interocular distance (t)]
Then, the data string d2_t is substituted into a predetermined calculation formula (2) to acquire a value sc2_t indicating the certainty as the authentication target person from various classifiers.

$$sc2\_t = f2 \ (d2\_t) \ ... \ (2)$$

Specific examples of f2 (x) include classifiers using CNN-based models represented by ResNet, VGGNet, and GoogleNet, as well as classifiers using ResNeXt, SENet, EfficientNet, and the like, and classifiers represented by logistic regression models or SVM models. Then, the value sc2_t indicating the certainty as the authentication target person is substituted into a predetermined calculation formula (3) to calculate an average (or weighted average), and the integration score Total_Score is outputted as a final result.

$$Total\_Score = (1/T) \ Sigma \ sc2\_t \ ... \ (3)$$

[Fourth example embodiment]

Hereinafter, an iris authentication system 4 according to a fourth example embodiment will be described below. In the following, differences with second example embodiment are mainly explained, and descriptions of common parts are omitted or simplified.

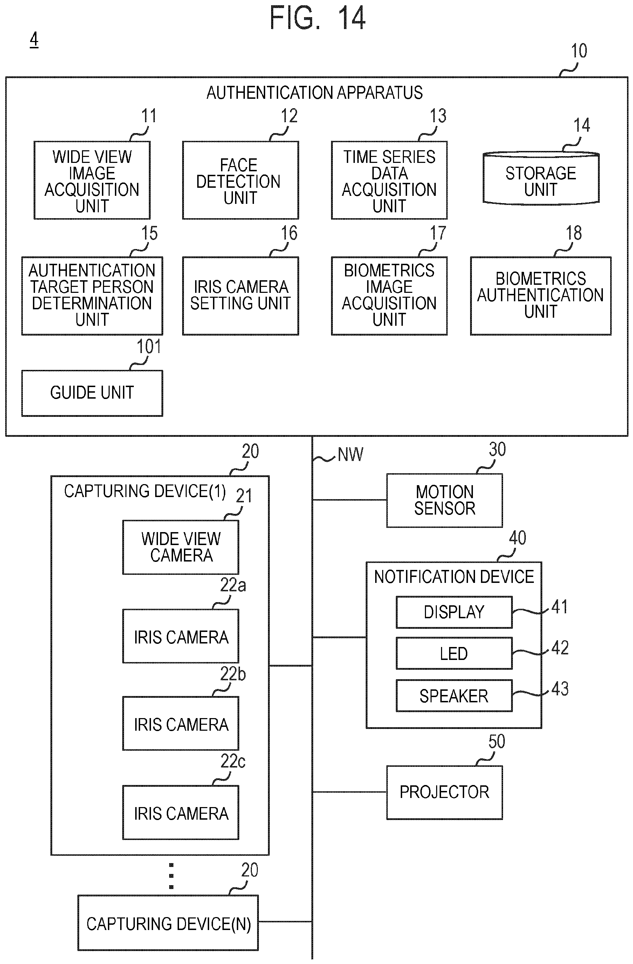

FIG. 14 is a block diagram illustrating an example of the overall configuration of the iris authentication system 4 according to the fourth example embodiment. As illustrated in FIG. 14, the iris authentication system 4 according to the fourth example embodiment is different from the iris authentication system 2 according to the second example embodiment in that the authentication apparatus 10 further includes a guide unit 101 and a projector 50 is further connected to the network NW.

The guide unit 101 generates an image for guiding a person determined as the authentication target person to an execution place of the biometrics authentication. Since the guide unit 101 grasps the current position based on the time series data of the authentication target person, the authentication target person can be guided to the closest capturing device 20. When a plurality of authentication target persons are detected, for example, each person may be guided to the relatively uncrowded capturing device 20 based on the priority of the person determined by image analysis of the captured image.

The projector 50 projects the guide image generated by the guide unit 101 onto, for example, a floor surface or a wall surface in the vicinity of the authentication target person, or onto a part of the capturing device 20 incorporating iris cameras 22a to 22c for capturing the iris image of the authentication target person.

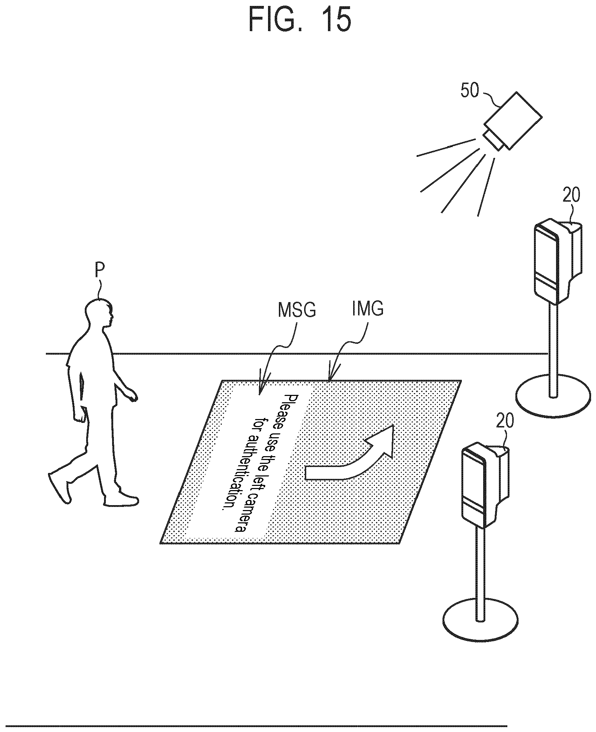

FIG. 15 is a diagram illustrating an example of an image projected by a projector according to the fourth example embodiment. Here, the projector 50 is arranged above the authentication area, and projects the guide image IMG on the floor surface in front of the person P who is the authentication target person. The image IMG includes a guide message MSG (Please use the left camera for authentication.) for the person P and an arrow for guiding the direction of movement.

According to the fourth example embodiment, the image for guiding the person determined to be the authentication target person to an execution place of biometrics authentication can be presented. Thus, the efficiency of biometrics authentication can be improved.

[Fifth example embodiment]

Hereinafter, a face authentication system 5 according to a fifth example embodiment will be described. In the following, differences with first example embodiment are mainly explained, and descriptions of common parts are omitted or simplified.

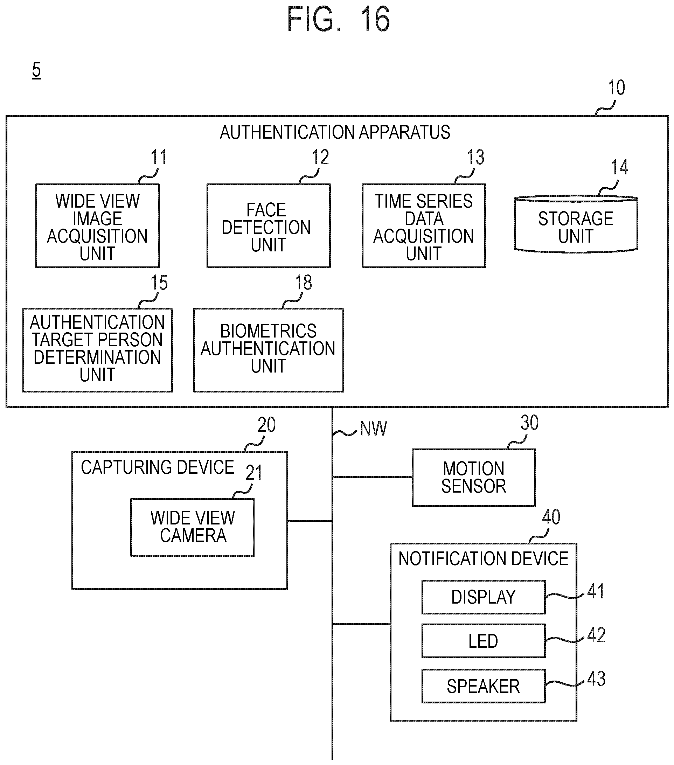

FIG. 16 is a block diagram illustrating an example of the overall configuration of the face authentication system 5 according to the fifth example embodiment. The face authentication system 5 according to the fifth example embodiment is different from the iris authentication system 1 according to the first example embodiment in that the face authentication is performed not based on the iris authentication but based on the face image of a person acquired from the wide view image. Therefore, as illustrated in FIG. 16, the authentication apparatus 10 does not include the iris camera setting unit 16 and the biometrics image acquisition unit 17. Further, the capturing device 20 is not provided with iris cameras 22a to 22c, but is provided only with the wide view camera 21.

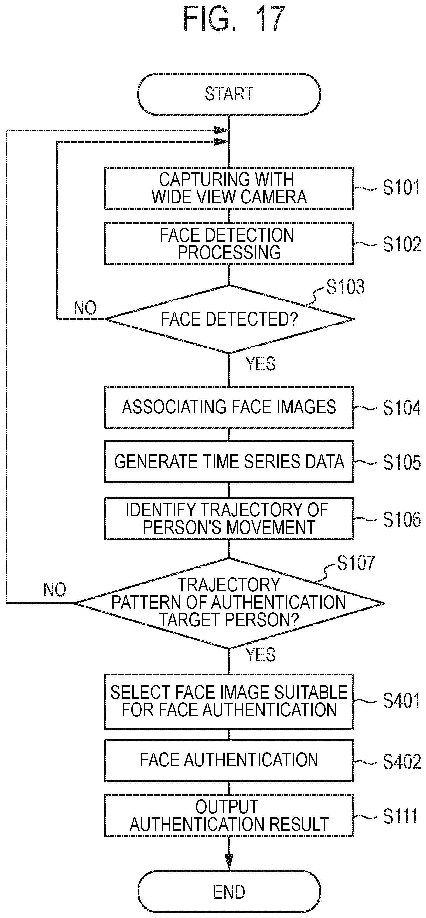

FIG. 17 is a flowchart illustrating an outline of the authentication processing performed by the authentication apparatus 10 according to the fifth example embodiment. This process is common to the flowchart illustrated in FIG. 5 for steps S101 to S107 and step Sill. For this reason, the following description focuses on a portion different from the flowchart of FIG. 5.

When the processing of steps S101 to S107 is completed, the process proceeds to step S401.

In step S401, the face detection unit 12 selects a face image suitable for face authentication from among the plurality of face images stored in the storage unit 14 for the authentication target person. For example, it is preferable that the face detection unit 12 selects a face image when the authentication target person faces the front of the camera.

In step S402, the biometrics authentication unit 18 performs face authentication by matching of the face image of the authentication target person selected in step S401 and the face image group of the registrant registered in advance in the storage unit 14. Thereafter, the process proceeds to step S111.

According to the fifth example embodiment, after it is determined that the detected person is an object to be authenticated based on the wide view image, face authentication can be performed based on the face image of the same person acquired from the wide view image. Since the iris cameras 22a to 22c do not need to separately capture the iris image of the person to be authenticated, the biometrics authentication system can be easily installed at a low cost as compared with the case of the first to fourth example embodiment described above.

[Sixth example embodiment]

Hereinafter, a biometrics authentication system according to a sixth example embodiment will be described. In the following, differences with first example embodiment are mainly explained, and descriptions of common parts are omitted or simplified.

The biometrics authentication system related to the sixth example embodiment is different from the iris authentication system 1 according to the first example embodiment in that it is determined whether or not a person is the authentication target person by taking into account not only the displacement (movement trajectory) of the position of the person in the three-dimensional coordinate system but also the direction of the body part such as the face and eyes of the person.

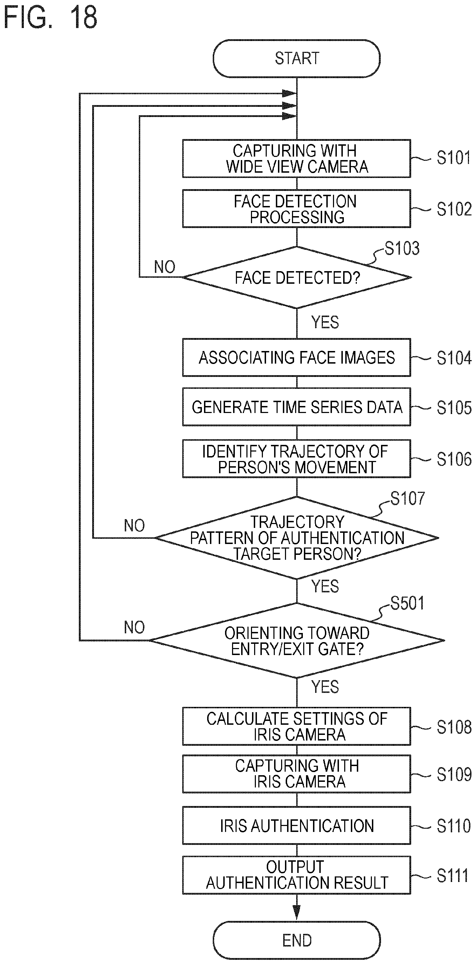

FIG. 18 is a flowchart illustrating an outline of the authentication processing performed by the authentication apparatus 10 according to the sixth example embodiment. This process is common to the flowchart illustrated in FIG. 5 for steps S101 to S107 and steps S108 to Sill. For this reason, the following description focuses on a portion different from the flowchart of FIG. 5. In the following description, it is assumed that the capturing device 20 is installed in the vicinity of an entrance/exit gate (not illustrated) of the authentication target person, and the authentication is received.

When the processing of steps S101 to S107 is completed, the process proceeds to step S501.

In step S501, the authentication target person determination unit 15 determines whether or not the person is oriented toward the entrance/exit gate based on the face direction or the visual line direction included in the time series data. If the authentication target person determination unit 15 determines that the person is oriented toward the entrance/exit gate (YES in step S501), the process proceeds to step S108.

On the other hand, if the authentication target person determination unit 15 determines that the person is not is oriented toward the entrance/exit gate (NO in step S501), the process returns to step S101. It is preferable to consider the duration time when the face direction or the visual line direction is within a predetermined range when determining whether the person is oriented toward the place where the biometrics authentication is performed, such as the entrance/exit gate. For example, if the person continuously faces the direction of the entrance/exit gate for a predetermined period of time or longer, the person's intention to be performed biometrics authentication may be estimated.

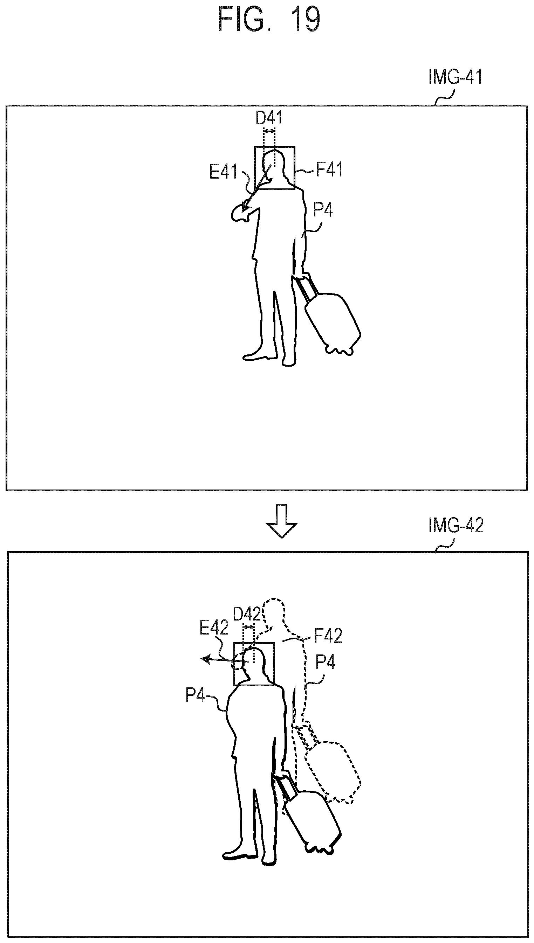

FIG. 19 is a diagram illustrating an example of a trajectory of movement and a visual line direction of a person who is determined not to be a person to be authenticated by the authentication apparatus 10 according to the sixth example embodiment. In FIG. 19, the captured image IMG-41 and the captured image IMG-42 are images continuously captured in a predetermined cycle by the wide view camera 21. The face F41 and the face F42 of the person P4 are detected from the captured image IMG-41 and the captured image IMG-42, respectively. The interocular distance of the person P4 in the captured image IMG-41 is D41. The interocular distance of the person P4 in the captured image IMG-42 is D41 longer than D41. It is also understood from the position coordinates of the face F41 and the face F42 that the person P4 is moving in the left oblique downward direction.

Therefore, in FIG. 19, the trajectory of the movement of the person P4 slightly approaching the capturing device 20 is specified. However, the visual line direction E41 of the person P4 in the captured image IMG-41 and the visual line direction E42 of the person P4 in the captured image IMG-42 do not coincide with the direction of the capturing device 20. That is, it is understood that the person P4 is a person who remains in a predetermined area. Thus, in the authentication apparatus 10, it is determined that the person P4 is a person who has no intention of authentication and is not the authentication target person. It should be noted that the trajectory pattern of the movement of the person who is determined not to be the authentication target person is not limited to this.

According to the sixth example embodiment, prior to biometrics authentication, not only the displacement of the position of the person in the three-dimensional coordinate system (trajectory of movement) but also the direction of a specific body part of the person are taken into account to determine whether the person is a person to be authenticated, so that it can be determined with higher accuracy whether the person has the intention to be performed biometrics authentication.

[Seventh example embodiment]

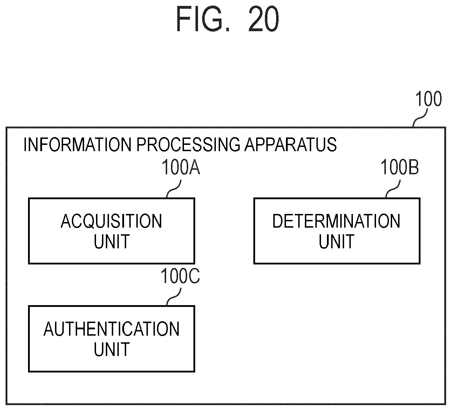

FIG. 20 is a functional block diagram illustrating the overall configuration of the information processing apparatus 100 according to a seventh example embodiment. The information processing apparatus 100 includes an acquisition unit 100A, a determination unit 100B, and an authentication unit 100C. The acquisition unit 100A acquires time series data representing a displacement of a position in a three-dimensional coordinate system regarding a person included in a captured image obtained by capturing a predetermined area. The determination unit 100B determines whether or not the person is a target person of biometrics authentication, based on the time series data. The authentication unit 100C performs the biometrics authentication to the target person.

According to the seventh example embodiment, there is provided an information processing apparatus 100 which can perform biometrics authentication for a person who is a target of authentication.

[Modified Example Embodiments]

This disclosure is not limited to example embodiment described above and may be modified as appropriate without departing from the spirit of this disclosure. For example, an example in which a portion of a configuration of one example embodiment is added to another example embodiment, or an example in which a portion of a configuration of another example embodiment is replaced is also a example embodiment of this disclosure.

A processing method in which a program for operating the configuration of example embodiment is recorded in a storage medium so as to realize the function of example embodiment, the program recorded in the storage medium is read out as a code and executed in a computer is also included in each example embodiment. That is, computer-readable storage media are also included in the scope of each example embodiment. Not only the storage medium on which the above-mentioned program is recorded but also the program itself is included in each example embodiment. The one or more components included in example embodiment may be circuits such as ASICs, FPGAs, etc., configured to implement the functions of the components.

As the storage medium, for example, a floppy (Registered trademark) disk, a hard disk, an optical disk, a magneto-optical disk, a CD (Compact Disk) -ROM, a magnetic tape, a nonvolatile memory card, and a ROM can be used. Further, the scope of each of the example embodiments includes an example that operates on OS (Operating System) to perform a process in cooperation with another software or a function of an add-in board without being limited to an example that performs a process by an individual program stored in the storage medium.

The services provided by the respective example embodiment functions described above can also be provided to the user in the form of Software as a Service (SaaS) .

It should be noted that example embodiment described above is merely an example of implementation of this disclosure, and the technical scope of this disclosure should not be construed as being limited thereto. That is, this disclosure may be implemented in a variety of ways without departing from its technical philosophy or its key features.

The whole or part of the example embodiments disclosed above can be described as, but not limited to, the following supplementary notes.

(Supplementary Note 1)

An information processing apparatus comprising:

an acquisition unit that acquires time series data representing a displacement of a position in a three-dimensional coordinate system regarding a person included in a captured image obtained by capturing a predetermined area;
a determination unit that, based on the time series data, determines whether or not the person is a target person of biometrics authentication; and
an authentication unit that performs the biometrics authentication to the target person.

(Supplementary Note 2)

The information processing apparatus according to supplementary note 1,
wherein the determination unit compares the displacement with a reference displacement at the time of moving toward a capturing position of a biometrics image used for the biometrics authentication to determine that the person moving toward the capturing position is the target person.

(Supplementary Note 3)

The information processing apparatus according to supplementary note 1 or 2,
wherein the determination unit determines whether or not the person is the target person based on the time series data, and visual line direction or face direction of the person detected from the captured image.

(Supplementary Note 4)

The information processing apparatus according to supplementary note 1 or 2,
wherein the determination unit calculates a score indicating the certainty that the person is the target person based on the time series data to determine whether or not the person is the target person based on the score.

(Supplementary Note 5)

The information processing apparatus according to supplementary note 4,

wherein the acquisition unit acquires the time series data related to the person for each camera based on the captured image captured by each of a plurality of cameras, and
wherein the determination unit integrates the scores calculated for each camera.

(Supplementary Note 6)

The information processing apparatus according to any one of supplementary notes 1 to 5, further comprising:
a training unit that trains a model that discriminates whether or not the person is the target person based on the time series data regarding a first person determined to be the target person and the time series data regarding a second person determined not to be the target person.

(Supplementary Note 7)

The information processing apparatus according to any one of supplementary notes 1 to 6, further comprising:
a guide section that provides a guide image regarding the biometrics authentication to the person when the person is determined to be the target person.

(Supplementary Note 8)

An information processing method comprising:

acquiring time series data representing a displacement of a position in a three-dimensional coordinate system regarding a person included in a captured image obtained by capturing a predetermined area;
based on the time series data, determining whether or not the person is a target person of biometrics authentication; and
performing the biometrics authentication to the target person.

(Supplementary Note 9)

A storage medium storing a program that causes a computer to perform:

acquiring time series data representing a displacement of a position in a three-dimensional coordinate system regarding a person included in a captured image obtained by capturing a predetermined area;
based on the time series data, determining whether or not the person is a target person of biometrics authentication; and
performing the biometrics authentication to the target person.

[Reference Signs List]

1, 2, 3, 4 Iris authentication system
5 Face authentication system
10 Authentication apparatus
11 Wide view image acquisition unit
12 Face detection unit
13 Time Series data acquisition Unit
14 Storage unit
15 Authentication target person determination unit
16 Iris camera setting unit
17 Biometrics image acquisition unit
18 Biometrics authentication unit
19 Training unit
20 Capturing device
21 Wide view camera
22a, 22b, 22c Iris camera
30 Motion sensor
40 Notification device
41 Display
42 LED
43 Speaker
50 Projector
100 Information processing apparatus
100A Acquisition unit
100B Determination unit
100C Authentication unit
101 Guide unit

**Claims**

1.  An information processing apparatus comprising:

an acquisition unit that acquires time series data representing a displacement of a position in a three-dimensional coordinate system regarding a person included in a captured image obtained by capturing a predetermined area;

a determination unit that, based on the time series data, determines whether or not the person is a target person of biometrics authentication; and

an authentication unit that performs the biometrics authentication to the target person.

2. The information processing apparatus according to claim 1,
wherein the determination unit compares the displacement with a reference displacement at the time of moving toward a capturing position of a biometrics image used for the biometrics authentication to determine that the person moving toward the capturing position is the target person.

3. The information processing apparatus according to claim 1 or 2,
wherein the determination unit determines whether or not the person is the target person based on the time series data, and visual line direction or face direction of the person detected from the captured image.

4. The information processing apparatus according to claim 1 or 2,
wherein the determination unit calculates a score indicating the certainty that the person is the target person based on the time series data to determine whether or not the person is the target person based on the score.

5. The information processing apparatus according to claim 4,

wherein the acquisition unit acquires the time series data related to the person for each camera based on the captured image captured by each of a plurality of cameras, and
wherein the determination unit integrates the scores calculated for each camera.

6. The information processing apparatus according to any one of claims 1 to 5, further comprising:
a training unit that trains a model that discriminates whether or not the person is the target person based on the time series data regarding a first person determined to be the target person and the time series data regarding a second person determined not to be the target person.

7. The information processing apparatus according to any one of claims 1 to 6, further comprising:
a guide section that provides a guide image regarding the biometrics authentication to the person when the person is determined to be the target person.

8. An information processing method comprising:

acquiring time series data representing a displacement of a position in a three-dimensional coordinate system regarding a person included in a captured image obtained by capturing a predetermined area;
based on the time series data, determining whether or not the person is a target person of biometrics authentication; and
performing the biometrics authentication to the target person.

9. A storage medium storing a program that causes a computer to perform:

acquiring time series data representing a displacement of a position in a three-dimensional coordinate system regarding a person included in a captured image obtained by capturing a predetermined area;
based on the time series data, determining whether or not the person is a target person of biometrics authentication; and
performing the biometrics authentication to the target person.

# FIG. 1

1

AUTHENTICATION APPARATUS — 10

| 11 | 12 | 13 | 14 |
|---|---|---|---|
| WIDE VIEW IMAGE ACQUISITION UNIT | FACE DETECTION UNIT | TIME SERIES DATA ACQUISITION UNIT | STORAGE UNIT |

| 15 | 16 | 17 | 18 |
|---|---|---|---|
| AUTHENTICATION TARGET PERSON DETERMINATION UNIT | IRIS CAMERA SETTING UNIT | BIOMETRICS IMAGE ACQUISITION UNIT | BIOMETRICS AUTHENTICATION UNIT |

NW

CAPTURING DEVICE — 20

WIDE VIEW CAMERA — 21

IRIS CAMERA — 22a

IRIS CAMERA — 22b

IRIS CAMERA — 22c

MOTION SENSOR — 30

NOTIFICATION DEVICE — 40

DISPLAY — 41

LED — 42

SPEAKER — 43

# FIG. 2

FIG. 3

| CAPTURED IMAGE ID | DETECTED FACE IMAGE ID | FACE IMAGE LINK ID | FACE POSITION | EYE POSITION | INTEROCULAR DISTANCE | FACE DIRECTION | CAPTURING DATE AND TIME |
|---|---|---|---|---|---|---|---|
| IMG-100234 | 10001 | L-001 | [FACE POSITION 1] | [EYE POSITION 1] | [INTEROCULAR DISTANCE 1] | [FACE DIRECTION 1] | [CAPTURING DATE AND TIME 1] |
| IMG-100235 | 10002 | L-001 | [FACE POSITION 2] | [EYE POSITION 2] | [INTEROCULAR DISTANCE 2] | [FACE DIRECTION 2] | [CAPTURING DATE AND TIME 2] |
| IMG-100236 | 10003 | L-001 | [FACE POSITION 3] | [EYE POSITION 3] | [INTEROCULAR DISTANCE 3] | [FACE DIRECTION 3] | [CAPTURING DATE AND TIME 3] |
| IMG-100237 | 10004 | L-001 | [FACE POSITION 4] | [EYE POSITION 4] | [INTEROCULAR DISTANCE 4] | [FACE DIRECTION 4] | [CAPTURING DATE AND TIME 4] |
| ⋮ | | | | | | | |

# FIG. 4

10

AUTHENTICATION APPARATUS

| | |
|---|---|
| PROCESSOR | 151 |
| RAM | 152 |
| ROM | 153 |
| STORAGE | 154 |
| COMMUNICATION I/F | 155 |

# FIG. 5

```
                    ┌─────────────┐
                    │    START    │
                    └─────────────┘
                           │
    ┌──────────────────────▼
    │  ┌────────────────────────────┐
    │  │      CAPTURING WITH        │ ── S101
    │  │     WIDE VIEW CAMERA       │
    │  └────────────────────────────┘
    │              │
    │  ┌────────────────────────────┐
    │  │      FACE DETECTION        │ ── S102
    │  │       PROCESSING           │
    │  └────────────────────────────┘
    │              │
    │          ╱───────────╲      S103
    │    NO   ╱  FACE DETECTED? ╲
    │  ◀─────◀                  ╲
    │         ╲                  ╱
    │          ╲───────────╱
    │              │ YES
    │  ┌────────────────────────────┐
    │  │   ASSOCIATING FACE IMAGES  │ ── S104
    │  └────────────────────────────┘
    │              │
    │  ┌────────────────────────────┐
    │  │  GENERATE TIME SERIES DATA │ ── S105
    │  └────────────────────────────┘
    │              │
    │  ┌────────────────────────────┐
    │  │  IDENTIFY TRAJECTORY OF    │ ── S106
    │  │   PERSON'S MOVEMENT        │
    │  └────────────────────────────┘
    │              │
    │          ╱───────────╲      S107
    │    NO   ╱  TRAJECTORY  ╲
    └────────◀ PATTERN OF AUTHENTICATION
             ╲ TARGET PERSON? ╱
              ╲───────────╱
                  │ YES
       ┌────────────────────────────┐
       │   CALCULATE SETTINGS OF    │ ── S108
       │        IRIS CAMERA         │
       └────────────────────────────┘
                  │
       ┌────────────────────────────┐
       │      CAPTURING WITH        │ ── S109
       │        IRIS CAMERA         │
       └────────────────────────────┘
                  │
       ┌────────────────────────────┐
       │     IRIS AUTHENTICATION    │ ── S110
       └────────────────────────────┘
                  │
       ┌────────────────────────────┐
       │         OUTPUT             │ ── S111
       │   AUTHENTICATION RESULT    │
       └────────────────────────────┘
                  │
           ┌─────────────┐
           │     END     │
           └─────────────┘
```

# FIG. 6

# FIG. 7A

# FIG. 7B

IMG-31

D31

F31  P3

⇓

IMG-32

D32

F32  L3

F31  P3

P3

# FIG. 8

2

AUTHENTICATION APPARATUS 10

| 11 | 12 | 13 | 14 |
|---|---|---|---|
| WIDE VIEW IMAGE ACQUISITION UNIT | FACE DETECTION UNIT | TIME SERIES DATA ACQUISITION UNIT | STORAGE UNIT |

| 15 | 16 | 17 | 18 |
|---|---|---|---|
| AUTHENTICATION TARGET PERSON DETERMINATION UNIT | IRIS CAMERA SETTING UNIT | BIOMETRICS IMAGE ACQUISITION UNIT | BIOMETRICS AUTHENTICATION UNIT |

NW

CAPTURING DEVICE(1) 20

21
WIDE VIEW CAMERA

22a
IRIS CAMERA

22b
IRIS CAMERA

22c
IRIS CAMERA

CAPTURING DEVICE(N) 20

MOTION SENSOR 30

NOTIFICATION DEVICE 40

DISPLAY 41

LED 42

SPEAKER 43

# FIG. 9

# FIG. 10

START

CAPTURING
WITH WIDE VIEW CAMERA — S101

FACE DETECTION PROCESSING — S102

S103
NO — FACE DETECTED?

YES

ASSOCIATING FACE IMAGES — S104

GENERATE TIME SERIES DATA — S105

IDENTIFY TRAJECTORY OF
PERSON'S MOVEMENT — S106

CALCULATE SCORE FOR EACH
CAMERA THAT INDICATES THE
CERTAINTY AS AUTHENTICATION
TARGET PERSON — S201

IDENTIFY SAME PERSON
BETWEEN CAMERAS — S202

INTEGRATE SCORES — S203

S204
NO — INTEGRATION
SCORE ≥ THRESHOLD

YES

ASSIGN NUMBERS TO
AUTHENTICATION TARGET
PERSON IN ORDER OF PROXIMITY
TO AUTHENTICATION AREA — S205

CALCULATE SETTINGS OF
IRIS CAMERA — S108

CAPTURING WITH IRIS CAMERA — S109

IRIS AUTHENTICATION — S110

OUTPUT
AUTHENTICATION RESULT — S111

END

# FIG. 11

<u>3</u>

FIG. 12

# FIG. 13

START

CAPTURING WITH
WIDE VIEW CAMERA — S101

FACE DETECTION
PROCESSING — S102

FACE DETECTED? — S103

NO

YES

ASSOCIATING FACE IMAGES — S104

GENERATE TIME SERIES DATA — S105

INPUT TIME SERIES DATA
INTO DISCRIMINANT MODEL — S301

AUTHENTICATION
TARGET PERSON? — S302

NO

YES

CALCULATE SETTINGS OF
IRIS CAMERA — S108

CAPTURING WITH
IRIS CAMERA — S109

IRIS AUTHENTICATION — S110

OUTPUT
AUTHENTICATION RESULT — S111

END

# FIG. 14

4

10

## AUTHENTICATION APPARATUS

**11** WIDE VIEW IMAGE ACQUISITION UNIT

**12** FACE DETECTION UNIT

**13** TIME SERIES DATA ACQUISITION UNIT

**14** STORAGE UNIT

**15** AUTHENTICATION TARGET PERSON DETERMINATION UNIT

**16** IRIS CAMERA SETTING UNIT

**17** BIOMETRICS IMAGE ACQUISITION UNIT

**18** BIOMETRICS AUTHENTICATION UNIT

**101** GUIDE UNIT

NW

**20** CAPTURING DEVICE(1)

**21** WIDE VIEW CAMERA

**22a** IRIS CAMERA

**22b** IRIS CAMERA

**22c** IRIS CAMERA

**20** CAPTURING DEVICE(N)

**30** MOTION SENSOR

**40** NOTIFICATION DEVICE

**41** DISPLAY

**42** LED

**43** SPEAKER

**50** PROJECTOR

30

# FIG. 15

# FIG. 16

<u>5</u>

10

## AUTHENTICATION APPARATUS

11
### WIDE VIEW IMAGE ACQUISITION UNIT

12
### FACE DETECTION UNIT

13
### TIME SERIES DATA ACQUISITION UNIT

14
### STORAGE UNIT

15
### AUTHENTICATION TARGET PERSON DETERMINATION UNIT

18
### BIOMETRICS AUTHENTICATION UNIT

NW

20
### CAPTURING DEVICE
21
### WIDE VIEW CAMERA

30
### MOTION SENSOR

40
### NOTIFICATION DEVICE
41 — DISPLAY
42 — LED
43 — SPEAKER

# FIG. 17

```
              ┌─────────────┐
              │    START    │
              └──────┬──────┘
                     │
    ┌────────────►───┤
    │   ┌───────►────┤
    │   │            ▼
    │   │   ┌──────────────────┐
    │   │   │  CAPTURING WITH  │ ～ S101
    │   │   │ WIDE VIEW CAMERA │
    │   │   └────────┬─────────┘
    │   │            ▼
    │   │   ┌──────────────────┐
    │   │   │  FACE DETECTION  │ ～ S102
    │   │   │    PROCESSING    │
    │   │   └────────┬─────────┘
    │   │            ▼              S103
    │   │        ◇─────────◇
    │   │   NO  ◇  FACE     ◇
    │   └──────◇ DETECTED?  ◇
    │           ◇─────────◇
    │                │ YES
    │                ▼
    │   ┌──────────────────────┐
    │   │ ASSOCIATING FACE     │ ～ S104
    │   │      IMAGES          │
    │   └──────────┬───────────┘
    │              ▼
    │   ┌──────────────────────┐
    │   │ GENERATE TIME        │ ～ S105
    │   │  SERIES DATA         │
    │   └──────────┬───────────┘
    │              ▼
    │   ┌──────────────────────┐
    │   │ IDENTIFY TRAJECTORY  │ ～ S106
    │   │ OF PERSON'S MOVEMENT │
    │   └──────────┬───────────┘
    │              ▼              S107
    │          ◇─────────◇
    │  NO     ◇ TRAJECTORY  ◇
    └─────────◇ PATTERN OF   ◇
              ◇ AUTHENTICATION◇
              ◇ TARGET PERSON?◇
               ◇─────────◇
                   │ YES
                   ▼
          ┌──────────────────────┐
          │ SELECT FACE IMAGE    │ ～ S401
          │ SUITABLE FOR FACE    │
          │   AUTHENTICATION     │
          └──────────┬───────────┘
                     ▼
          ┌──────────────────────┐
          │ FACE AUTHENTICATION  │ ～ S402
          └──────────┬───────────┘
                     ▼
          ┌──────────────────────┐
          │      OUTPUT          │ ～ S111
          │ AUTHENTICATION RESULT│
          └──────────┬───────────┘
                     ▼
              ┌─────────────┐
              │     END     │
              └─────────────┘
```

# FIG. 18

```
                    ┌──────────────┐
                    │    START     │
                    └──────┬───────┘
                           │
    ┌──────────────────────┤
    │  ┌───────────────────┤
    │  │  ┌────────────────┤
    │  │  │     ┌─────────────────────────┐
    │  │  │     │   CAPTURING WITH        │── S101
    │  │  │     │   WIDE VIEW CAMERA      │
    │  │  │     └────────────┬────────────┘
    │  │  │     ┌────────────┴────────────┐
    │  │  │     │   FACE DETECTION        │── S102
    │  │  │     │   PROCESSING            │
    │  │  │     └────────────┬────────────┘
    │  │  │              S103
    │  │  │  NO    ╱ FACE DETECTED? ╲
    │  │  └───────◀                 ▶
    │  │          ╲                 ╱
    │  │                 │ YES
    │  │     ┌───────────┴─────────────┐
    │  │     │ ASSOCIATING FACE IMAGES │── S104
    │  │     └───────────┬─────────────┘
    │  │     ┌───────────┴─────────────┐
    │  │     │ GENERATE TIME SERIES DATA│── S105
    │  │     └───────────┬─────────────┘
    │  │     ┌───────────┴─────────────┐
    │  │     │ IDENTIFY TRAJECTORY OF  │── S106
    │  │     │ PERSON'S MOVEMENT       │
    │  │     └───────────┬─────────────┘
    │  │              S107
    │  │   NO    ╱ TRAJECTORY           ╲
    │  └────────◀ PATTERN OF AUTHENTICATION▶
    │            ╲ TARGET PERSON?       ╱
    │                   │ YES
    │                S501
    │        NO  ╱ ORIENTING TOWARD ╲
    └───────────◀ ENTRY/EXIT GATE?   ▶
                 ╲                   ╱
                        │ YES
            ┌───────────┴─────────────┐
            │ CALCULATE SETTINGS OF   │── S108
            │ IRIS CAMERA             │
            └───────────┬─────────────┘
            ┌───────────┴─────────────┐
            │ CAPTURING WITH          │── S109
            │ IRIS CAMERA             │
            └───────────┬─────────────┘
            ┌───────────┴─────────────┐
            │ IRIS AUTHENTICATION     │── S110
            └───────────┬─────────────┘
            ┌───────────┴─────────────┐
            │ OUTPUT                  │── S111
            │ AUTHENTICATION RESULT   │
            └───────────┬─────────────┘
                        │
                 ┌──────┴───────┐
                 │     END      │
                 └──────────────┘
```

# FIG. 19

# FIG. 20

100

INFORMATION PROCESSING APPARATUS

100A

ACQUISITION
UNIT

100B

DETERMINATION
UNIT

100C

AUTHENTICATION
UNIT

## INTERNATIONAL SEARCH REPORT

International application No.

**PCT/JP2021/028791**

### A. CLASSIFICATION OF SUBJECT MATTER

*G06T 7/20*(2017.01)i
FI: G06T7/20 300Z

According to International Patent Classification (IPC) or to both national classification and IPC

### B. FIELDS SEARCHED

Minimum documentation searched (classification system followed by classification symbols)

G06T7/20

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-003010 A (KABUSHIKI KAISHA TOSHIBA) 07 January 2010 (2010-01-07) paragraphs [0013]-[0026] | 1-4, 8, 9 |
| A | entire text | 5-7 |
| X | JP 2015-035180 A (FUJI XEROX CO., LTD.) 19 February 2015 (2015-02-19) paragraphs [0017]-[0093] | 1, 7-9 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 October 2021** | **26 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/028791**

| Patent document<br>cited in search report | Publication date<br>(day/month/year) | Patent family member(s) | Publication date<br>(day/month/year) |
|---|---|---|---|
| JP 2010-003010 A | 07 January 2010 | (Family: none) | |
| JP 2015-035180 A | 19 February 2015 | US 2015/0047018 A1<br>paragraphs [0017]-[0093]<br>CN 104349046 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020065852 A